# EUROPÄISCHE PATENTANMELDUNG

(11) **EP 3 819 198 A1**
(43) Veröffentlichungstag der Anmeldung: **12.05.2021**
(21) Anmeldenummer: 20206006.7
(22) Anmeldetag: 05.11.2020
(51) Int. Cl.: B62J 9/25

(54) **ADAPTER ZUM ANBRINGEN VON GEGENSTAENDEN AM TANK EINES MOTORRADES**

(30) Priorität: 05.11.2019 DE 102019129833
(71) Anmelder: SW-Motech GmbH & Co. KG, 35282 Rauschenberg (DE)
(72) Erfinder: Rhiel, Fabian, 35274 Kirchhain Hessen (DE); Stephens, Adam, 35232 Dautphe Hessen (DE); Edelmann, Maurice, 35260 Stadtallendorf Hessen (DE); Klug, Bastian, 35037 Marburg Hessen (DE)
(74) Vertreter: Patentanwälte Olbricht Buchhold Keulertz

(57) **Zusammenfassung**

Ein Adapter (10) zum Anbringen eines Gegenstandes (12) am Tank (T) eines Motorrades, umfasst ein Unterteil (20), das mit dem Tank (T) des Motorrades verbindbar ist, und ein Oberteil (30), das mit wenigstens einem Fixiermittel (40) mit dem anzubringenden Gegenstand (12) verbindbar ist, wobei das Oberteil (30) und das Unterteil (20) in lösbarer Weise an- und/oder ineinanderfügbar sowie in gefügter Position sicherbar sind. Um ein rasches und bequemes Verstellen des Gegenstandes (12) relativ zum Tank (T) zu ermöglichen, ist vorgesehen, dass derAdapter (10) eine Führungseinrichtung (50) ausbildet oder vorsieht, welche wenigstens eine Längsführung (74) für das Oberteil (30) aufweist, wobei das wenigstens eine Fixiermittel (40) das Oberteil (30) in einer auswählbaren Position entlang der Längsführung (74) relativ zum anzubringenden Gegenstand (12) fixiert.

## Beschreibung

Die Erfindung betrifft einen Adapter zum Anbringen von Gegenständen am Tank eines Motorrades gemäß dem Oberbegriff von Anspruch 1.

Bei Motorrädern sind üblicherweise der Stauraum und die Möglichkeiten, während der Fahrt benötigte Geräte wie beispielsweise Navigationsgeräte, Mobiltelefone, Straßenkarten in Reichweite des Fahrers zu befestigen, beschränkt. Man hat daher Befestigungsvorrichtungen entwickelt, die das Anbringen von Gegenständen auf dem Tank eines Motorrades ermöglichen. Bei den Gegenständen handelt es sich beispielsweise um Taschen, Tankrucksäcke, Halterungen für technische Geräte, u.dgl.

EP 2 289 783 B1 sieht beispielsweise einen zweiteiligen Adapter vor. Dieser besteht aus einem mit dem Tank des Motorrades verbindbaren Unterteil und einem mit dem anzubringenden Gegenstand koppelbaren Oberteil. Letzteres wird mittels Schrauben an dem Gegenstand (z.B. einem Tankrucksack) fixiert, indem mittels einer Bohrschablone Löcher in den Boden des Gegenstandes eingebracht werden. Anschließend wird das Oberteil mit den Schrauben, die in die gebohrten Löcher eingesteckt werden, am Boden des Gegenstands fest verschraubt. Das Oberteil und das Unterteil sind in lösbarer Weise an- und/oder ineinanderfügbar sowie in gefügter Position sicherbar, wobei das Oberteil eine Schnappvorrichtung aufweist, die in gefügter Position mit dem Unterteil in Eingriff steht. Auf diese Weise kann der Gegenstand, beispielsweise ein Tankrucksack, jederzeit auf dem Tank befestigt und wieder abgenommen werden.

DE 10 2010 037 912 A1 offenbart ebenfalls eine Vorrichtung zum Befestigen von Gepäckstücken oder Motorradzubehör auf einem Tank eines Motorrads mit einem Unterteil, das als Tankringadapter am Tank befestigt wird, und einem Oberteil, das bodenseitig mit dem Gepäckstück verbunden ist. Ein schnelles und festes Verbinden der beiden Teile (Unterteil und Oberteil) wird dadurch erreicht, dass im Unterteil und im Oberteil Stabmagnete unterschiedlicher Polarisierung vorhanden sind. Durch Aufsetzen des Oberteils auf das Unterteil wird durch die Stabmagnete eine Anzugskraft erzeugt, die das Gepäckstück am Tank fixiert. Für das Lösen der Vorrichtung ist ein Schieber vorgesehen, der die Stabmagnete im Oberteil relativ zu den Stabmagneten im Unterteil verschiebt, so dass eine Abstoßkraft erzeugt wird, die das Gepäckstück vom Tank löst.

Ein Nachteil dieser vorbekannten Adapter besteht darin, dass eine nachträgliche individuelle Positionierung bzw. Verstellung des angebrachten Gegenstands relativ zum Tank nicht ohne weiteres möglich ist, jedenfalls nicht ohne den Einsatz einer Bohrschablone und dem Einbringen von weiteren, zusätzlichen Löcher im Boden des Gegenstandes. Eine rasche und bequeme Verstellung wird damit verhindert, zumal für jede einzelne Verstellung eine Bohrmaschine benötigt wird. Ferner führt eine wiederholte Verstellung oder Neupositionierung des Gegenstands zur Schwächung des Bodens. Fehlt gar die Bohrschablone, müssen die Bohrungen von Hand angezeichnet werden, was zu Ungenauigkeiten führt und die Neupositionierung erschwert.

Aufgabe der Erfindung ist es, einen verbesserten Adapter zum Anbringen von Gegenständen am Tank eines Motorrades bereitzustellen, der die Nachteile im Stand der Technik überwindet. Der Adapter soll insbesondere eine schnelle und bequeme Möglichkeit zur Positionierung des Tankrucksacks relativ zum Tank bieten, ohne erneut Löcher in den Boden des anzubringenden Gegenstandes bohren zu müssen. Der Adapter soll ferner eine rasche und präzise Auswahl der gewünschten Position in Längsrichtung ermöglichen und eine ebenso einfache wie zuverlässige Handhabung gewährleisten. Angestrebt wird ferner eine kostengünstige Ausführung des Adapters. Dieser soll den Gegenstand stets sicher am Tank fixieren.

Hauptmerkmale der Erfindung sind im kennzeichnenden Teil von Anspruch 1 angegeben. Ausgestaltungen sind Gegenstand der Ansprüche 2 bis 15.

Bei einem Adapter zum Anbringen eines Gegenstandes am Tank eines Motorrades, bestehend aus einem Unterteil, das mit dem Tank des Motorrades verbindbar ist, und einem Oberteil, das mit wenigstens einem Fixiermittel mit dem anzubringenden Gegenstand verbindbar ist, wobei das Oberteil und das Unterteil in lösbarer Weise an- und/oder ineinanderfügbar sowie in gefügter Position sicherbar sind, sieht die Erfindung vor, dass eine Führungseinrichtung ausgebildet oder vorgesehen ist, welche wenigstens eine Längsführung für das Oberteil aufweist, wobei das wenigstens eine Fixiermittel das Oberteil in einer auswählbaren Position entlang der Längsführung relativ zum anzubringenden Gegenstand fixiert.

Eine derartige Ausgestaltung des Adapters hat den Vorteil, dass dieser eine schnelle und bequeme Möglichkeit zur Positionierung bzw. Verschiebung des Tankrucksacks relativ zum Tank ermöglicht. Bei einer Positionierung des Tankrucksacks mittels des erfindungsgemäßen Adapters und der erfindungsgemäßen Führungseinrichtung, müssen keine neuen Löcher in den Boden gebohrt werden. Der Adapter ermöglicht gleichzeitig eine rasche und präzise Auswahl der gewünschten Position in Längsrichtung sowie eine einfache und zuverlässige Handhabung und fixiert den Tankrucksack stets sicher am Tank. Ferner ist der erfindungsgemäße Adapter relativ kostengünstig in der Herstellung.

In einer Ausführungsform der Erfindung erstreckt sich die wenigstens eine Längsführung in Längsrichtung des anzubringenden Gegenstandes, wodurch dessen Positionierung in Längsrichtung möglich ist.

Eine bevorzugte Ausführungsform der Erfindung sieht vor, dass die Führungseinrichtung im oder am Boden des Gegenstandes ausgebildet ist. Dadurch kann wird die Verschiebung des Tankrucksacks in Längsrichtung erleichtert.

Eine wichtige Ausgestaltung der Erfindung sieht hervor. Danach weist die Führungseinrichtung eine Grundplatte auf, wobei die wenigstens eine Längsführung in der Grundplatte ausgebildet ist und am Boden des anzubringenden Gegenstandes fixiert oder mit diesem einstückig ausgebildet ist. Vorteilhaft hieran ist, dass das einstückige Ausbilden der Grundplatte mit dem Boden des anzubringenden Gegenstandes den Fertigungsaufwand reduziert, da hierdurch die Anzahl der Einzelteile verringert wird. Die Grundplatte kann vorteilhafter Weise sowohl als Klemmmaterial zwischen Führungselement und Oberteil dienen, als auch durch die Ausbildung der Längsführung an der Grundplatte, gleichzeitig die Längsverschiebung des Tankrucksacks ermöglichen.

Die Erfindung sieht weiter vor, dass die Längsführung ein Längsschlitz, eine Nut, o.dgl. ist. Schlitz oder Nutartige Längsführungen bzw. Ausnehmungen bieten den Vorteil, dass Teilelemente des Adapters bzw. der Führungseinrichtung zweckmäßig durch die Längsführung greifen bzw. hindurchragen können.

Auf vorteilhafte Weise sind an den Enden der Längsführung jeweils ein Anschlag ausgebildet, wodurch der Stellweg der in Längsrichtung innerhalb der Längsführung geführten Elemente definiert wird. Bei gegenläufigen Elementen (wie zum Beispiel das Führungselement) können passend zu den Anschlägen, Ausnehmungen ausgebildet sein wodurch Material eingespart werden kann. Außerdem sinkt das Gewicht der Gesamtvorrichtung durch diese Maßnahme.

Ein wichtiger Vorteil besteht darin, dass die Führungseinrichtung zwei Längsführungen aufweist, wobei diese parallel zueinander verlaufen. Dadurch können Teile der Führungseinrichtung symmetrisch ausgebildet sein, was wiederum die Ausrichtung bei der Montage vereinfacht. Gleichzeitig bieten zwei parallel verlaufende Längsführungen den Vorteil einer sicheren Befestigung und einer hohen Festigkeit.

Eine bevorzugte Ausführungsform der Erfindung sieht vor, dass die Grundplatte ein mittleres Langloch aufweist, wobei das mittlere Langloch in Längsrichtung kürzer ausgebildet ist als die Längsführung. Durch das Langloch in der Grundplatte und den Bohrungen am Führungselement sowie am Oberteil, kann zum Zwecke einer Diebstahlsicherung, ein Sperrbolzen eingebracht werden. Hierbei reicht die Länge des Langlochs in Längsrichtung vollkommen aus, um bei jeder möglichen Positionsauswahl während der Verschiebung des Tankrucksacks, fluchtend an den Bohrungen ausgerichtet zu sein. Dadurch dass das Langloch relativ kurz ausgebildet ist, bleibt mehr Material an der Grundplatte übrig, wodurch die Steifigkeit bzw. die Festigkeit gesteigert wird.

Die Erfindung sieht ferner vor, dass die Grundplatte eine Ausnehmung aufweist, wodurch beispielsweise ein Führungselement aufgenommen werden kann. Gleichzeitig wird durch die Ausnehmung das Gewicht der Gesamtvorrichtung reduziert.

Mit Vorteil werden jede Längsführung und das mittlere Langloch innerhalb der Ausnehmung angeordnet, wodurch das Einbringen der Längsführungen und des Langlochs in die Grundplatte vereinfacht wird, da durch die Ausnehmung die Wandstärke der Grundplatte verringert wird.

Vorzugsweise ist die Grundplatte symmetrisch ausgebildet. Das erleichtert die Montage, da die Grundplatte beliebig ausgerichtet werden kann aufgrund der Symmetrie.

In weiterer Ausgestaltung der Erfindung weist die Führungseinrichtung wenigstens ein Führungselement auf, das in der Längsführung der Führungseinrichtung längsverschieblich geführt werden kann und zwischen der Grundplatte und dem Tankrucksack angeordnet ist. Bevorzugterweise ist das Führungselement eine symmetrisch ausgebildete Verstellplatte und ist in der Ausnehmung der Grundplatte angeordnet. Das hat zum einen den Vorteil, dass die Ränder an der Oberseite der Grundplatte, die aufgrund der Ausnehmung hervorstehen, gleichzeitig als Anlagefläche sowie Führungsränder für die Verstellplatte genutzt werden können und den Stellweg in Längsrichtung definieren. Zum anderen sorgt auch hier der symmetrische Aufbau für eine einfachere Ausrichtung bei der Montage.

Ein weiterer Vorteil ergibt sich dadurch, dass die Verstellplatte mittig zwei Bohrungen aufweist. Diese werden wie das Langloch an der Grundplatte und die Bohrungen am Oberteil, für das Durchstecken eines Sperrbolzens im Sinne eines Diebstahlschutzes genutzt.

Die Erfindung sieht ferner vor, dass das wenigstens eine Führungselement einen Vorsprung aufweist, der in der Längsführung der Führungseinrichtung geführt ist. Dadurch wird die Gleitreibung zwischen dem Führungselement und der Führungseinrichtung bzw. der Längsführung der Führungseinrichtung deutlich verringert.

Ein weiterer wichtiger Vorteil besteht darin, dass das Oberteil mit einem Verbindungsmittel mit dem Führungselement der Führungseinrichtung verbindbar ist, wodurch letztendlich die Kopplung des Oberteils an den Tankrucksack realisiert wird und die Verschiebung in Längsrichtung ermöglicht wird. Vorzugsweise sind die Verbindungsmittel Schraubverbindungen. Hierdurch kann problemlos die Klemmkraft durch teilweise lösen der Schrauben reduziert werden, ohne die Kopplung zwischen Oberteil und Führungselement zu lösen.

Eine bevorzugte Ausführungsform der Erfindung sieht vor, dass zwischen der Führungseinrichtung und dem Oberteil eine Rasteinrichtung ausgebildet ist.

Die Rasteinrichtung weist Vertiefungen auf, die an oder in der Grundplatte ausgebildet sind, wobei die Vertiefungen quer, sowie senkrecht, zur Längsrichtung ausgerichtet sind und sich über die Länge der Längsführung der der Führungseinrichtung erstrecken.

Die Rasteinrichtung hat ferner Vorsprünge, die an oder in dem Oberteil ausgebildet sind, wobei die Vorsprünge quer, vorzugsweise senkrecht, zur Längsrichtung ausgerichtet sind und sich bevorzugt über die Länge des Oberteils erstrecken.

Das Vorsehen einer Rasteinrichtung hat den Vorteil, dass die Verschiebung des Tankrucksacks in Längsrichtung kontrolliert erfolgt und ein zu starkes abruptes Verschieben unterdrückt wird. Gleichzeitig fixiert die Rasteinrichtung zusätzlich die Führungseinrichtung mit dem Oberteil, wenn ruckartige bzw. große Kräfte in Brems- und Beschleunigungsrichtung des Motorrades wirken.

Man erkennt, dass die Vorsprünge des Oberteils in jeder der auswählbaren Positionen des Oberteils entlang der Längsführung in die Vertiefungen der Grundplatte eingreifen, was eine stets sichere und kontrollierte Justierung und Fixierung des Gegenstands am Tank gewährleistet.

Eine weitere Ausführungsform der Erfindung sieht vor, dass das wenigstens eine Fixiermittel das Oberteil und den anzubringenden Gegenstand in der auswählbaren Position entlang der Längsführung lösbar aneinander fixiert.

Hierbei ist es zweckmäßig, dass das wenigstens eine Fixiermittel von dem Verbindungsmittel gebildet ist. Dies vereinfacht die Konstruktion und sorgt für eine einfache und unkomplizierte Handhabung des Adapters.

Ergänzend oder alternativ kann das wenigstens eine Fixiermittel eine Schraubverbindung, eine Bajonettverbindung, eine Rastverbinndung, eine Klemmverbindung, ein Klettverschluss, o.dgl. sein. Diese Fixiermittel können unmittelbar zwischen dem Gegenstand und dem Oberteil ausgebildet sein. Man kann das Fixiermittel aber auch zwischen Oberteil und Verstellplatte vorsehen, weil diese über die Führungseinrichtung und deren Grundplatte unmittelbar an dem Gegenstand fixiert wird.

Das Oberteil kann eine Bohrung für die Aufnahme des Sperrelement aufweisen, wobei es zweckmäßig ist, wenn die Bohrung im Oberteil und das Langloch der Grundplatte in jeder auswählbaren Position des Oberteils entlang der Längsführung mit einer der Bohrungen für das Sperrelement in der Verstellplatte fluchten.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Gesamtdarstellung des Adapters mit Unterteil (Tankring), Oberteil, den Platten und dem Tankrucksack
- Fig. 2: Explosionsdarstellung von oben
- Fig. 3: Explosionsdarstellung von unten
- Fig. 4: Schnittansicht Oberteil, Grund- und Verstellplatte A-A
- Fig. 5: Darstellung der Führungseinrichtung und des Gegenstandes im montierten Zustand von unten
- Fig. 6: Seitenansicht und Funktionsdarstellung der Führungseinrichtung - Verstellung in Längsrichtung

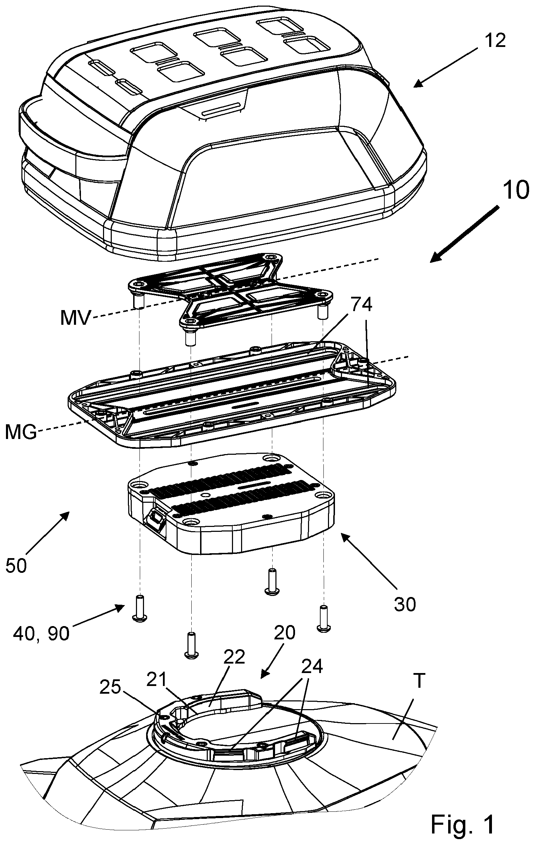

Der in Fig. 1 allgemein mit 10 bezeichnete Adapter ist dazu ausgebildet, einen Gegenstand 12, beispielsweise einen Tankrucksack, eine Packtasche oder ein Gehäuse für eine technische Einrichtung, an einem Tank T eines (nicht weiter dargestellten) Motorrades lösbar zu befestigen.

Der Tankrucksack 12 hat einen sich in dessen Längsrichtung L erstreckenden Boden 14, Seitenwände 18 und einen (nicht näher bezeichneten) Deckel sowie einen Griff 16.

Der Adapter 10 umfasst ein Unterteil 20, das mit dem Tank T des Motorrades verbindbar ist, sowie ein Oberteil 30, das mit wenigstens einem Fixiermittel 40 mit dem anzubringenden Tankrucksack 12 verbindbar ist, wobei das Oberteil 30 und das Unterteil 20 in lösbarer Weise an- und/oder ineinanderfügbar sowie in gefügter Position auf dem Tank T sicherbar sind, vorzugsweise mit einer (nicht dargestellten) Rastvorrichtung, welche das Unterteil 20 und das Oberteil 30 lösbar miteinander verbindet.

Der Adapter 10 hat ferner eine Führungseinrichtung 50, die dazu ausgebildet ist, den Tankrucksack12 innerhalb eines definierten Stellbereichs entlang der Längsrichtung L relativ zum Oberteil 30 und damit relativ zum Tank T zu positionieren, wobei die Führungseinrichtung 50 wenigstens eine Längsführung 74 für das Oberteil 30 aufweist, und wobei das wenigstens eine Fixiermittel 40 das Oberteil 30 in einer auswählbaren Position entlang der Längsführung 74 relativ zum anzubringenden Gegenstand 12 fixiert.

Auf diese Weise ist es möglich, den Tankrucksack 12 jederzeit relativ zum Tank T neu zu positionieren, ohne dass zusätzliche oder wiederholt Löcher in den Boden 14 des Tankrucksacks 12 gebohrt werden müssen.

Das in Fig. 1 dargestellte Unterteil 20 ist im Wesentlichen hufeisenförmig ausgebildet und umfasst eine Basis 21 sowie einen Befestigungsabschnitt 22. Wie man erkennt, werden die Basis 21 und der Befestigungsabschnitt 22, an der (nicht näher gezeigten) Einfüllöffnung des Tanks T fixiert, wobei hierfür die Befestigungsschrauben 25 der Einfüllöffnung bzw. des Tankrings verwendet werden. Der Befestigungsabschnitt 22 des Unterteils hat beispielsweise radial nach außen gerichtete Rasthervorhebungen 24, die zur Rastvorrichtung zwischen dem Unterteil 20 und dem Oberteil 30 gehören und die beim An-und/oder Ineinanderfügen von Unterteil 20 und Oberteil 30 mit korrespondierenden Rastelementen 41 des Oberteils 30 in Eingriff gelangen.

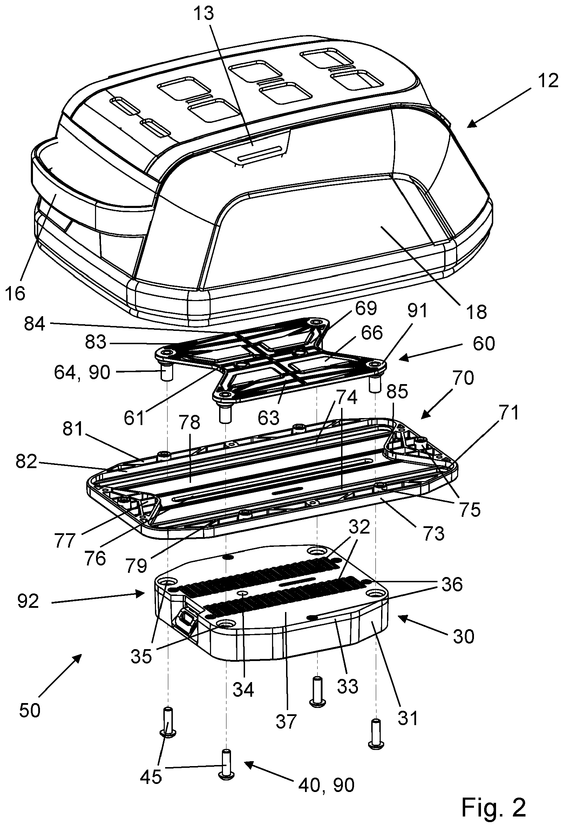

Das Oberteil 30 umfasst ein Gehäuse 31 sowie einen mittels Befestigungsschrauben 36 am Gehäuse 31 fixierbaren Deckel 33. Letzterer ist an seiner Oberseite 37 mit einer Vielzahl an Vorsprüngen 32 versehen, die bevorzugt quer zur Längsrichtung L ausgerichtet sind und die sich - nebeneinander angeordnet und in äquidistanten Abständen - bevorzugt über die gesamte Länge des Deckels 33 bzw. des Oberteils 30 erstrecken. Man erkennt in Fig. 2, dass die Vorsprünge 32 bevorzugt in zwei Reihen angeordnet sind, die parallel in Längsrichtung L verlaufen.

Auf seiner Unterseite 43 weist das Oberteil 30 eine Ausnehmung 44 für die Aufnahme des Unterteils 20 auf. In der Ausnehmung 44 sind die korrespondierenden Rastelemente 41 des Oberteils 30 ausgebildet. Diese werden beispielsweise über Magnetelemente 38 betätigt, die in dem Gehäuse 31 des Oberteils 30 integriert sind. In der Ausnehmung 44 ist ferner eine bogenförmige Fixierhilfe 39 ausgebildet, die als Führungselement das An- und/oder Ineinanderfügen von Oberteil 30 und Unterteil 20 vereinfacht.

Mittels einer (nicht weiter im Detail dargestellten) Betätigungsvorrichtung 42 können die Rastelemente 41 des Oberteils 30 von den Rasthervorhebungen 24 des Unterteils 20 voneinander gelöst werden. Hierzu ist beispielsweise an der Betätigungsvorrichtung 42 ein Seil angebracht, das zum Lösen des Oberteils 30 von dem Unterteil 20 gezogen werden muss.

Das Oberteil 30 weist ferner mittig zwischen den Reihen der Vertiefungen 32 eine Bohrung 34 auf, in die bei Bedarf ein (nicht gezeigter) Sperrbolzen eingesetzt werden kann.

Die Führungseinrichtung 50 ist am Boden 14 des Tankrucksacks 12 ausgebildet und hat wenigstens eine Längsführung 74, die sich in Längsrichtung L des anzubringenden Tankrucksacks 12 erstreckt. Sie hat eine sich ebenfalls in Längsrichtung L erstreckende Grundplatte 70 und ein Führungselement 60, das in dem vorliegenden Ausführungsbeispiel als Verstellplatte ausgebildet ist. Die Verstellplatte 60 ist in der Längsführung 74 längsverschieblich in der Grundplatte 70 geführt.

Die Grundplatte 70 hat einen Grundkörper 73 mit einer dem Tankrucksack 12 zugeordneten Oberseite 79 und einer dem Oberteil 30 zugeordneten Unterseite 80, wobei der Grundkörper 73 mit der Oberseite 79 an der außenliegenden Unterseite des Bodens 14 des Tankrucksacks 12 fixiert wird. Hierzu weist der Grundkörper 73 randseitig Anschraubdome 75 auf, in die (nicht dargestellte) Schrauben eingreifen.

Die Längsführung 74 der Führungseinrichtung 50 ist - wie Fig. 2 weiter zeigt - in dem Grundkörper 73 ausgebildet. Sie umfasst zwei randseitig eingebrachte Längsschlitze, die in Längsrichtung L parallel verlaufen und die sich über nahezu die gesamte Länge des Grundkörpers 73 erstrecken. Ferner weist der Grundkörper 73 entlang seiner Mittelachse MG ein Langloch 76 auf, das parallel und mittig zwischen den Längsschlitzen 74 verläuft.

Das Langloch 76 dient ebenfalls zur Aufnahme des Sperrbolzens. Es ist in Längsrichtung L kürzer ausgebildet ist als die beiden Längsschlitze der Längsführungsführung 74.

Die dem Oberteil zugewandte Unterseite 80 des Grundkörpers 73 ist- korrespondierend zu den Vorsprüngen 32 des Oberteils 30 - mit einer Anzahl an Vertiefungen 72 versehen, wobei die einzelnen Vertiefungen 72 - ebenso wie die Vorsprünge 32 - quer zur Längsrichtung L ausgerichtet sind. Die Vertiefungen 72 sind bevorzugt nebeneinander und in äquidistanten Abständen angeordnet. Sie bilden - wie die Vorsprünge 32 - zwei Reihen, die jeweils zwischen den Längsschlitzen 74 und dem Langloch 76 parallel in Längsrichtung L verlaufen und die sich bevorzugt über die gesamte Länge der Grundplatte 70 bzw. des Grundkörpers 73 erstrecken.

Man erkennt, dass die Vorsprünge 32 des Oberteils 30 und die Vertiefungen 72 der Grundplatte 70 eine Rasteinrichtung 92 bilden, die zwischen der Führungseinrichtung 50 und dem Oberteil 30 ausgebildet ist, wobei die Vorsprünge 32 des Oberteils 30 in jeder der auswählbaren Positionen des Oberteils 30 entlang der Längsführung 74 in die Vertiefungen 72 der Grundplatte 70 eingreifen.

Auf seiner dem Tankrucksack 12 zugewandten Oberseite 79 bildet der Grundkörper 73 einen Außenrand 81 sowie einen Innenrand 82. Zwischen dem Außenrand 81 und dem Innenrand 82 sind Versteifungsrippen 77 ausgebildet, die bevorzugt zwischen den Anschraubdomen 75 liegen.

Wie insbesondere Fig. 2 weiter zeigt, begrenzt der Innenrand 82 eine Ausnehmung 78 für die Aufnahme der Verstellplatte 60, wobei die Längsschlitze 74 und das Langloch 76 innerhalb der Ausnehmung 78 liegen.

Endseitig ist der Innenrand 82 des Grundkörpers 73 im Wesentlichen V-förmig ausgebildet, weshalb das mittig liegende Langloch 76 kürzer ausgebildet ist als die randseitigen Längsschlitze 74, die sich bis in außenliegende Eckbereiche 71 der Ausnehmung 78 erstrecken.

Man erkennt in den Fig. 1 bis 4, dass die Grundplatte 70 spiegelsymmetrisch zur Mittelachse MG ausgebildet ist.

Die Verstellplatte 60 als Führungselement hat einen Grundkörper 83 mit einer dem Tankrucksack 12 zugeordneten Oberseite 69 und einer dem Oberteil 30 sowie der Grundplatte 70 zugeordneten Unterseite 68.

Der Grundkörper 83 ist im Wesentlichen flach und spiegelsymmetrisch zu einer Mittelachse MV ausgebildet ist. Die Längsseiten 84 des Grundkörpers 83 sind gerade ausgebildet, wobei die Breite der Verstellplatte 60 derart bemessen ist, dass diese mit Bewegungsspiel in die Ausnehmung 78 der Grundplatte 70 eingesetzt werden kann und mit ihren Längsseiten 84 innerhalb des Innenrands 82 der Grundplatte 70 längsverschieblich geführt ist. Die in Längsrichtung L liegenden Stirnseiten 61 des Grundkörpers 83 sind - korrespondierend zu den V-förmigen Endseiten des Innenrands 82 der Grundplatte 70 - ebenfalls V-förmig gestaltet.

In Eckbereichen 91 des Grundkörpers 83 ist auf der Unterseite 68 der Verstellplatte 60 jeweils ein zylinderförmiger Vorsprung 65 ausgebildet, dessen Außendurchmesser - bis auf ein Bewegungsspiel - der Breite der Längsschlitze 74 im Grundkörper 73 der Grundplatte 70 entspricht. Die Breite der Längsschlitze 74 bemisst sich senkrecht zur Längsrichtung L. Die Vorsprünge 65 sind derart in den Eckbereichen 91 der Verstellplatte 60 angeordnet, dass jeweils zwei Vorsprünge 65 auf jeweils einer Seite der Verstellplatte 60 in den dort liegenden Längsschlitz 74 eingreifen und darin längsverschieblich geführt sind, wenn die Verstellplatte 60 in die Grundplatte 70 eingesetzt ist.

Damit liegt die Verstellplatte 60 zumindest abschnittsweise formschlüssig in der Ausnehmung 78 der Grundplatte 70 und sie kann zwischen zwei Anschlägen 85 entlang der Längsrichtung L hin und her verschoben werden.

Die Anschläge für die Verstellplatte 60 werden entweder von den außenliegenden Enden 71 der Längsschlitze 74 in der Grundplatte 70 gebildet, indem die zylinderförmigen Vorsprünge 65 der Verstellplatte 60 jeweils ein Ende 71 erreichen und dort zum Anliegen kommen.

Alternativ können die Anschläge 85, wie in Fig. 2 dargestellt, aber auch von den V-förmigen Endseiten des Innenrands 82 der Grundplatte 70 gebildet werden, indem die Verstellplatte 60 mit ihren stirnseitigen V-förmigen Enden 61 an den Anschlägen 85 zum Anliegen kommt.

Der Grundkörper 83 der Verstellplatte 60 hat ferner entlang der Mittelachse MV zwei Bohrungen 62, die fluchtend mit dem Langloch 76 in der Grundplatte 70 ausgerichtet sind. Auch die Bohrungen 62 dienen der Aufnahme des Sperrbolzens.

Um die Stabilität der Verstellplatte 60 zu erhöhen sind auf der Oberseite 69 und auf der Unterseite 68 des Grundkörpers 83 Anpressflächen 66 und Versteifungsrippen 63 vorgesehen.

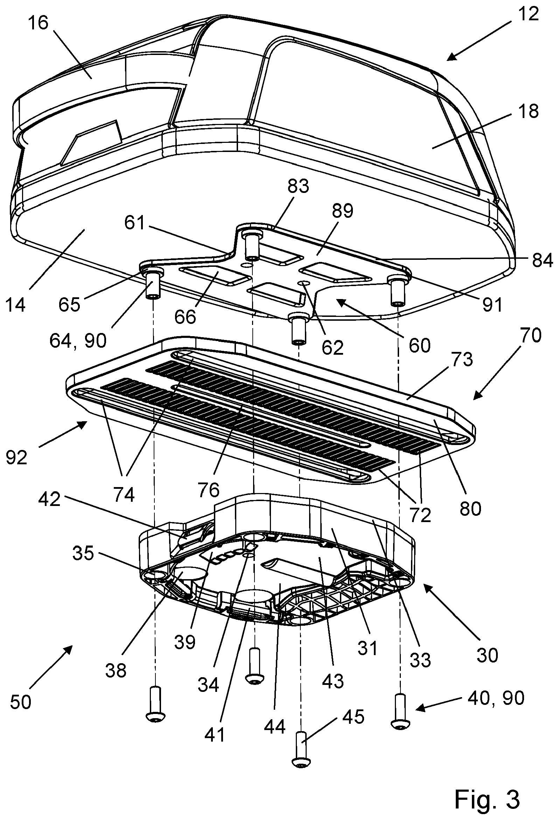

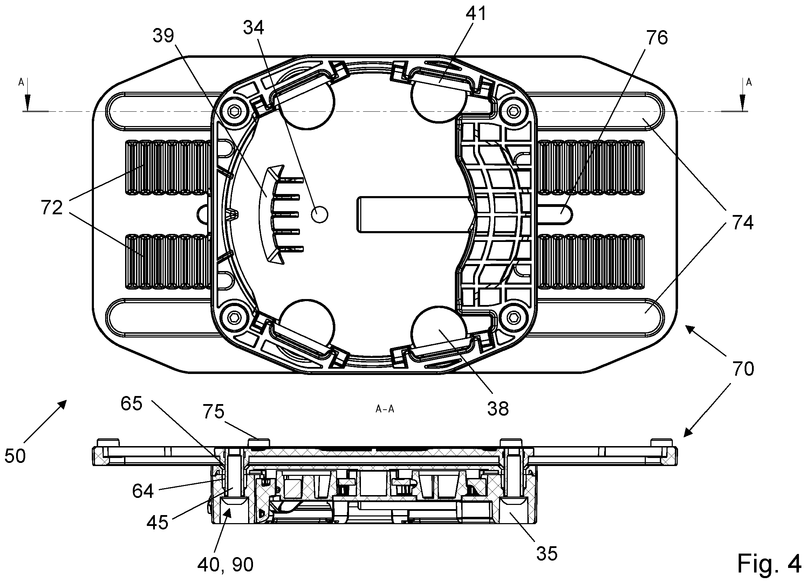

Man erkennt in den Fig. 3 und 4, dass das Oberteil 30 durch vier Verbindungsmittel 90 mit dem Führungselement 60 der Führungseinrichtung 50 und folglich mit der Verstellplatte verbindbar ist. Jedes Verbindungsmittel 90 ist in dem vorliegenden Beispiel eine Schraubverbindung, die wie in der Schnittdarstellung in Fig. 4 verdeutlicht, von einer Hülse 64 und einer Schraube 45 gebildet wird.

Jede Hülse 64 - bevorzugt aus Metall gefertigt und mit einem (nicht gezeigten) zur Schraube 45 passenden Innengewinde versehen - sitzt auf oder in einem der zylindrischen Vorsprünge 65 der Verstellplatte 60 und ragt - nach der Montage des Adapters 10 - von der Oberseite 37 des Oberteils 30 her in eine der Bohrungen 35 im Oberteil 30 des Adapters 10 hinein. Jede Hülse 64 ist nach dem Einsetzen der Verstellplatte 60 in die Grundplatte 70 in den Längsschlitzen 74 geführt.

Die Länge der Hülsen 64 ist derart bemessen, dass beim Anziehen der Schrauben 45 - die von der Unterseite 43 des Oberteils 30 aus in die Bohrungen 35 eingesetzt werden - das Oberteil 30 fest gegen die Grundplatte 70 gepresst werden kann.

Damit bilden die Verbindungsmittel 90 gleichzeitig auch die Fixiermittel 40, um das Oberteil 30 fest am Boden 14 des Tankrucksacks 12 zu fixieren, sobald der Tankrucksack 12 seine gewünschte Position relativ zum Tank T eingenommen hat. Folglich werden die Verbindungsmittel 90 derart verwendet, dass das wenigstens eine Fixiermittel 40 das Oberteil 30 und den anzubringenden Gegenstand 12 in der auswählbaren Position entlang der Längsführung 74 lösbar aneinander fixiert.

Bei der Montage des Adapters 10 wird zu Beginn die gesamte Führungseinrichtung 50, inklusive dem Oberteil 30, am Tankrucksack 12 fixiert. Dazu wird zunächst die Verstellplatte 60 in die Ausnehmung 78 an der Oberseite 79 der Grundplatte 70 eingesetzt. Beim Einsetzen der Verstellplatte 60 in die Ausnehmung 78, werden die an den Eckbereichen 91 der Verstellplatte 60 befindlichen Vorsprünge 65 und Hülsen 64 in die Längsschlitze 74 eingeführt.

Anschließend wird die Grundplatte 70, mit ihrer Oberseite 79 an den Boden 14 des Tankrucksacks 12 angelegt, und mittels Befestigungsschrauben, über die Anschraubdome 75 am Boden 14 des Tankrucksacks 12 fixiert. Damit die Fixierung erfolgen kann, werden vor dem Anlegen der Grundplatte 70 an den Boden 14, mittels einer Bohrschablone Bohrungen in den Boden 14 eingebracht. Die Befestigungsschrauben können dann beim Fixieren über die Anschraubdome 75 in den Boden 14 eingebracht werden. Die Schraubenspitzen, die durch den Boden 14 in den Tankrucksack 12 hineinragen, können beispielsweise mit Kunststoffkappen abgedeckt werden.

Nach dem Fixieren der Grundplatte 70, ist die Verstellplatte 60 zwischen der Grundplatte 70 und dem Boden 14 des Tankrucksacks 12, längsverschieblich gelagert, wobei die Fixiermittel 40, namentlich deren Hülsen 64, über die zylindrischen Vorsprünge 65 in den Längsschlitzen 74 geführt sind und durch diese hindurchragen.

Auf die Hülsen 64 wird nun das Oberteil 30 aufgesetzt, wobei jede Hülse 64 in eine der Bohrungen 35 in den Eckbereichen des Oberteils 30 eingreift.

Von der Unterseite 43 des Oberteils 30 her werden die Schrauben 45 in Bohrungen 35 und in die Hülsen 64 der Fixiermittel 40 eingesetzt und eingeschraubt.

Zieht man die Schrauben 45 der Fixiermittel 40 (der Verbindungsmittel 90) fest an, wird das Oberteil 30 fest mit dem anzubringenden Gegenstand 12, namentlich dem Tankrucksack, verbunden und die Vorsprünge 32 auf der Oberseite 37 des Oberteils 30 werden in die korrespondierenden Vertiefungen 72 in der Unterseite 80 der Grundplatte 70 gepresst. Diese Rasteinrichtung 92 und die Anpresskraft der Fixiermittel 40 sorgen dafür, dass der Tankrucksack 12 in der gewählten Position relativ zum Oberteil 30 des Adapters 10 stets fest fixiert ist und sich auch während dem Fahren mit dem Motorrad nicht lösen oder verschieben kann.

Setzt man den Tankrucksack 12 mit dem Oberteil 30 auf das Unterteil 20 am Tank T des Motorrads auf, wird der Tankrucksack 12 in der gewählten Position auf dem Tank T des Motorrads befestigt. Er kann über die Rastverbindung zwischen Oberteil 30 und Unterteil 20 jederzeit vom Tank T gelöst werden.

Soll die Position des Tankrucksacks 12 relativ zum Tank T verändert werden, beispielweise weil der Tankrucksack 12 zu weit vorne oder zu weit hinten sitzt, wird zunächst das an der Führungseinrichtung 50 befestigte Oberteil 30 vom Unterteil 20 - vorzugsweise über die (nicht weiter dargestellte) Betätigungsvorrichtung 42 - gelöst und der Tankrucksack 12 vom Tank T abgenommen.

Anschließend löst man die Schrauben 45 der Fixiermittel 40 soweit, bis keine starke Klemm- bzw. Spannkraft mehr zwischen dem Oberteil 30 und der Führungseinrichtung 50 wirkt und sich die Vorsprünge 32 auf der Oberseite 37 des Oberteils 30 von den Vertiefungen 72 in der Unterseite 80 der Grundplatte 70 lösen können. Die Wirkung der Rasteinrichtung 92 wird dadurch nicht vollständig aufgehoben.

Jetzt ist es möglich, das Oberteil 30 und die damit verbundene und in der Grundplatte 70 längsverschieblich gelagerte Verstellplatte 60 um eine gewünschte Strecke in Längsrichtung L zu verschieben, wobei die noch immer ineinandergreifenden Vorsprünge 32 und Vertiefungen 72 der Rasteinrichtung 92 ineinandergreifen und dadurch eine präzise und einfache Positionierung gewährleisten. Das Oberteil 30 bleibt mit der Führungseinrichtung 50 und dem Tankrucksack 12 gekoppelt, weil die Fixiermittel 40 nur teilweise gelöst werden.

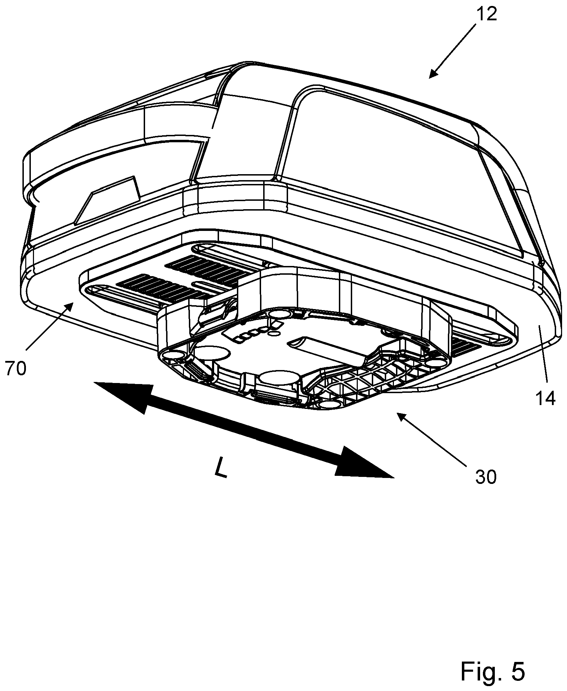

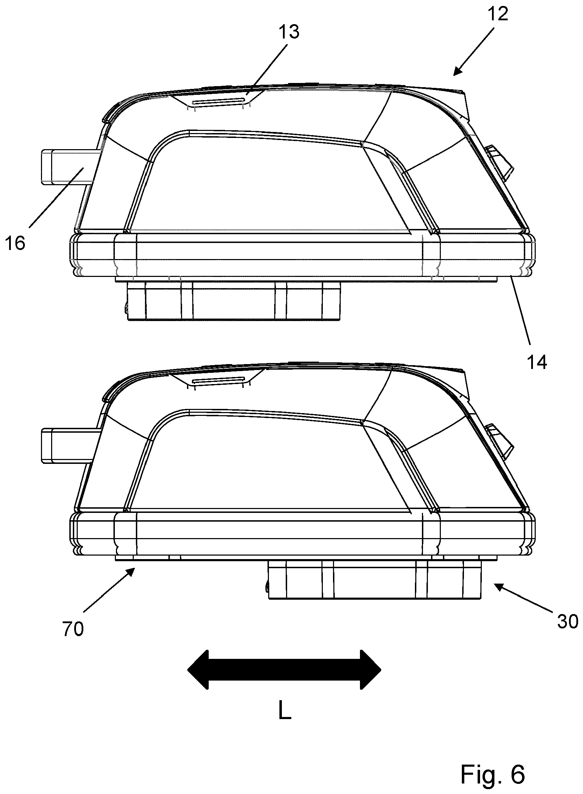

Ist die gewünschte Position erreicht, zieht man die Schrauben 45 der Fixiermittel 40 in den Hülsen 64 wieder an, bis die Vorsprünge 32 auf der Oberseite 37 des Oberteils 30 wieder in die korrespondierenden Vertiefungen 72 in der Unterseite 80 der Grundplatte 70 gepresst werden (siehe dazu insbesondere die Fig. 5 und 6).

Der Tankrucksack 12 ist nun in einer anderen Position gegenüber dem Tank T fixiert (Fig. 6) und kann mit dem Oberteil 30 wieder auf das Unterteil 20 und damit auf den Tank T aufgesetzt und daran fixiert werden.

Die Bohrung 34 im Gehäusedeckel 33 des Oberteils 30, eine der Bohrungen 62 in der Verstellplatte 60 und das Langloch 76 in der Grundplatte 70 fluchten in allen ausgewählten Positionen des Oberteils 30 entlang der Längsrichtung L und können daher einen Sperrstift aufnehmen, der als Diebstahlschutz dient.

Ein wesentlicher Vorteil des erfindungsgemäßen Adapters 10 besteht darin, dass man die Positionierung des Tankrucksacks 12 in Längsrichtung L durch einfaches Verschieben realisieren kann. Es müssen - im Gegensatz zum Stand der Technik - keine neuen Bohrungen in den Boden 14 des Tankrucksacks 12 bzw. des Gegenstands eingebracht werden.

Dadurch wird zum einen der Zeitaufwand für die Verstellung bzw. Neupositionierung des Tankrucksacks 12 reduziert und zum anderen wird der Boden 14 des Tankrucksacks 12 geschont. Durch wiederholte Bohrvorgänge, wird das Material des Bodens 14 stark geschwächt, wodurch gleichzeitig auch die maximal mögliche Anzahl der Verstellungsmöglichkeit stark begrenzt wird. Führt man zu viele Verschiebungen durch und bohrt immer wieder neue Löcher in den Boden 14 des Tankrucksacks 12, könnte es dazu führen, gar keine Verstellung mehr durchführen zu können.

Die Erfindung ist nicht auf eine der vorbeschriebenen Ausführungsformen beschränkt, sondern in vielfältiger Weise abwandelbar. So kann die Führungseinrichtung 50 im Boden 14 des Tankrucksacks ausgebildet sind. Dazu kann man die Grundplatte 70 im Boden 14 integrieren oder die Grundplatte 70 mit dem Boden 14 einstückig ausbilden.

Man kann alternativ eine andere Aufteilung der Vorsprünge 32 und Vertiefungen 72 der Rasteinrichtung 92 wählen, um das Verschieben des Oberteils 30 relativ zum Gegenstand 12 zu erschweren oder zu erleichtern. Auch können die Ausrichtung und die Form der Vorsprünge 32 und Vertiefungen 72 geändert werden. Beispielsweise in Form von runden oder ovalen Elementen 32, 72, die zudem bei Bedarf jeweils in nur einer Reihe angeordnet sind.

Die Fixiermittel 40 können - wie oben beschrieben - von den Verbindungsmitteln 90 gebildet werden, die zwischen dem Oberteil 30 und der Verstellplatte 60 in Form der Hülsen 64 und der Schrauben 45 ausgebildet sind.

Man kann die Fixiermittel 40 aber auch getrennt von den Verbindungsmitteln 90 ausbilden, beispielsweise in Form einer separaten Schraubverbindung, einer Bajonettverbindung, einer Rastverbinndung, einer Klemmverbindung, einem Klettverschluss, o.dgl., wobei jedes Fixiermittel dazu ausgebildet und vorgesehen ist, das Oberteil 30 in der gewünschten Position entlang der Längsrichtung L fest mit der Verstellplatte 60 und über die Grundplatte 70 mit dem anzubringenden Gegenstand 12 zu verbinden.

Die Bohrung 34 im Oberteil 30 des Adapters 10 dient der Aufnahme eines (nicht gezeigten) Sperrelements, das sich in montierter Stellung durch die Bohrung 34 im Oberteil, dem Langloch 76 in der Grundplatte 70 und einer der Bohrungen 62 in der Verstellplatte 69 hindurch erstreckt. Hierzu ist es notwendig, dass die Bohrung 34 im Oberteil 30 und das Langloch 76 der Grundplatte 70 in jeder auswählbaren Position des Oberteils 30 entlang der Längsführung 74 mit einer der Bohrungen 62 für das Sperrelement in der Verstellplatte 60 fluchten. Auf diese Weise wird verhindert, dass das Oberteil 30 relativ zum Tank T verschoben werden kann.

Man erkennt, dass ein Adapter 10 zum Anbringen eines Gegenstandes 12 am Tank T eines Motorrades, umfasst ein Unterteil 20, das mit dem Tank T des Motorrades verbindbar ist, und ein Oberteil 30, das mit wenigstens einem Fixiermittel 40 mit dem anzubringenden Gegenstand 12 verbindbar ist, wobei das Oberteil 30 und das Unterteil 20 in lösbarer Weise an- und/oder ineinanderfügbar sowie in gefügter Position sicherbar sind. Um ein rasches und bequemes Verstellen des Gegenstandes 12 relativ zum Tank T zu ermöglichen, ist vorgesehen, dass der Adapter 10 eine Führungseinrichtung 50 ausbildet oder vorsieht, welche wenigstens eine Längsführung 74 für das Oberteil 30 aufweist, wobei das wenigstens eine Fixiermittel 40 das Oberteil 30 in einer auswählbaren Position entlang der Längsführung 74 relativ zum anzubringenden Gegenstand 12 fixiert.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| T | Tank | 45 | Schrauben |
| L | Längsrichtung | 50 | Führungseinrichtung |
| MG | Mittlere Symmetrieachse der Grundplatte | 60 | Verstellplatte |
| | | 61 | Stirnseiten |
| MV | Mittlere Symmetrieachse der Verstellplatte | 62 | Bohrung |
| | | 63 | Versteifungsrippen |
| | | 64 | Hülse |
| 10 | Adapter | 65 | zylindrischer Vorsprung |
| 12 | Anzubringender Gegenstand | 66 | Anpressfläche |
| 13 | Seitenlaschen | 68 | Unterseite der Verstellplatte |
| 14 | Boden | 69 | Oberseite der Verstellplatte |
| 16 | Griff | 70 | Grundplatte |
| 18 | Seitenwände | 71 | Ende |
| 20 | Unterteil | 72 | Vertiefungen |
| 21 | Basis | 73 | Grundkörper Grundplatte |
| 22 | Befestigungsabschnitt | 74 | Längsschlitz |
| 24 | Rasthervorhebung | 75 | Anschraubdom |
| 25 | Befestigungsschrauben | 76 | Langloch |
| 30 | Oberteil | 77 | Versteifungsrippen |
| 31 | Gehäuse Oberteil | 78 | Ausnehmung |
| 32 | Vorsprünge | 79 | Oberseite der Grundplatte |
| 33 | Gehäusedeckel | 80 | Unterseite der Grundplatte |
| 34 | Bohrung | 81 | Außenrand |
| 35 | Bohrung | 82 | Innenrand |
| 36 | Befestigungsschrauben | 83 | Grundkörper Verstellplatte |
| 37 | Oberseite des Oberteils | 84 | Längsseiten |
| 38 | Magnetelemente | 85 | Anschläge |
| 39 | Fixierhilfe | 90 | Verbindungsmittel |
| 40 | Fixiermittel | 91 | Eckbereich |
| 41 | Rastelemente | 92 | Rasteinrichtung |
| 42 | Betätigungsvorrichtung | | |
| 43 | Unterseite des Oberteils | | |
| 44 | Ausnehmung | | |

## Patentansprüche

1. Adapter (10) zum Anbringen eines Gegenstandes (12) am Tank (T) eines Motorrades, bestehend aus einem Unterteil (20), das mit dem Tank (T) des Motorrades verbindbar ist, und einem Oberteil (30), das mit wenigstens einem Fixiermittel (40) mit dem anzubringenden Gegenstand (12) verbindbar ist, wobei das Oberteil (30) und das Unterteil (20) in lösbarer Weise an- und/oder ineinanderfügbar sowie in gefügter Position sicherbar sind, **dadurch gekennzeichnet,**
▪ dass eine Führungseinrichtung (50) ausgebildet oder vorgesehen ist, welche wenigstens eine Längsführung (74) für das Oberteil (30) aufweist,
▪ wobei das wenigstens eine Fixiermittel (40) das Oberteil (30) in einer auswählbaren Position entlang der Längsführung (74) relativ zum anzubringenden Gegenstand (12) fixiert.

2. Adapter nach Anspruch 1, **dadurch gekennzeichnet, dass** sich die wenigstens eine Längsführung (74) in Längsrichtung (L) des anzubringenden Gegenstandes (12) erstreckt.

3. Adapter nach Anspruch 1 oder 2, **dadurch gekennzeichnet, dass** die Führungseinrichtung (50) im oder am Boden (14) des Gegenstandes (12) ausgebildet ist.

4. Adapter nach einem der vorherigen Ansprüche, **dadurch gekennzeichnet, dass** die Führungseinrichtung (50) eine Grundplatte (70) aufweist, wobei die Grundplatte (70) am Boden (14) des anzubringenden Gegenstandes (12) fixiert oder mit diesem einstückig ist.

5. Adapter nach Anspruch 4 oder 5, **dadurch gekennzeichnet, dass** die wenigstens eine Längsführung (74) der Führungseinrichtung (50) in der Grundplatte (70) ausgebildet ist.

6. Adapter nach einem der Ansprüche 4 bis 12, **dadurch gekennzeichnet, dass** die Grundplatte (70) eine Ausnehmung (78) aufweist.

7. Adapter nach einem der vorhergehenden Ansprüche, **dadurch gekennzeichnet, dass** die Führungseinrichtung (50) wenigstens ein Führungselement (60) aufweist, das in der Längsführung (74) der Führungseinrichtung (50) längsverschieblich geführt ist.

8. Adapter nach Anspruch 16, **dadurch gekennzeichnet, dass** das wenigstens eine Führungselement (60) in der Ausnehmung (78) der Grundplatte (70) angeordnet ist.

9. Adapter nach Anspruch 16 oder 17, **dadurch gekennzeichnet, dass** das wenigstens eine Führungselement (60) zwischen der Grundplatte (60) und dem anzubringenden Gegenstand (12) angeordnet ist.

10. Adapter nach einem der Ansprüche 16 bis 18, **dadurch gekennzeichnet, dass** das wenigstens eine Führungselement (60) eine Verstellplatte ist.

11. Adapter nach einem der Ansprüche 16 bis 22, **dadurch gekennzeichnet, dass** das Oberteil (30) mit einem Verbindungsmittel (90) mit dem Führungselement (60) der Führungseinrichtung (50) verbindbar ist.

12. Adapter nach einem der vorhergehenden Ansprüche, **dadurch gekennzeichnet, dass** zwischen der Führungseinrichtung (50) und dem Oberteil (30) eine Rasteinrichtung (92) ausgebildet ist.

13. Adapter nach Anspruch 25, **dadurch gekennzeichnet, dass** die Rasteinrichtung (92) zwischen der Grundplatte (70) und dem Oberteil (30) ausgebildet ist.

14. Adapter nach einem der vorhergehenden Ansprüche, **dadurch gekennzeichnet, dass** das wenigstens eine Fixiermittel (40) das Oberteil (30) und den anzubringenden Gegenstand (12) in der auswählbaren Position entlang der Längsführung (74) lösbar aneinander fixiert.

15. Adapter nach Anspruch 34, **dadurch gekennzeichnet, dass** das wenigstens eine Fixiermittel (40) von dem Verbindungsmittel (90) gebildet ist oder dass das wenigstens eine Fixiermittel (40) eine Schraubverbindung, eine Bajonettverbindung, eine Rastverbinndung, eine Klemmverbindung, ein Klettverschluss, o.dgl. ist.
